# FASCICULE DE BREVET EUROPEEN

(11) **EP 1 195 084 B1**
(45) Date de publication et mention de la délivrance du brevet: **01.06.2005**
(21) Numéro de dépôt: 01440331.5
(22) Date de dépôt: 03.10.2001
(51) Int. Cl.: A01C 7/20, A01B 49/06

(54) **Semoir perfectionné**
Verbesserts Sämaschine
Improved sowing machine

(30) Priorité: 05.10.2000 FR 0012876
(43) Date de publication de la demande: 10.04.2002
(73) Titulaire: Kuhn-Huard S.A., 44142 Chateaubriant Cedex (FR)
(72) Inventeur: Gentilhomme, Guy, 44110 Louisfert (FR); Challon, Patrice, 53200 Bazouges (FR)
(74) Mandataire: Andres, Jean-Claude

(56) Documents cités:
- EP-A- 0 612 464
- DE-A- 3 601 354
- US-A- 4 191 262

## Description

La présente invention se rapporte au domaine technique générale du machinisme agricole. Elle concerne plus particulièrement un semoir comportant :
- un timon d'attelage destiné à être lié à un véhicule moteur,
- un corps comportant
   * un châssis composé :
      - d'un châssis avant lié audit timon d'attelage, portant des outils ouvreurs et s'appuyant sur le sol au moyen de roues qui y sont liées de manière à pouvoir être déplacées en hauteur au moyen d'organes de liaison, et
      - d'un châssis arrière lié au châssis avant au moyen d'une articulation centrale d'axe longitudinal au moins sensiblement vertical,
      et
   * un dispositif de semis comportant entre autres une trémie et des organes d'implantation de graines dans le sol, ces derniers étant portés par le châssis arrière.

Un tel semoir est connu dans l'état de la technique, notamment par la demande de brevet **EP 0 612 464.** En sus des caractéristiques énumérées ci-dessus, ce semoir connu comporte également des moyens de verrouillage implantés entre le châssis avant et le châssis arrière. Lors du travail, ces moyens de verrouillage permettent avantageusement le libre pivotement du châssis arrière par rapport au châssis avant autour de ladite articulation centrale. Par contre lors du transport, ces moyens de verrouillage suppriment ledit pivotement. Avec ce semoir connu, les outils ouvreurs sont destinés à préparer des lignes de semis dans lesquels les organes d'implantation déposent de la semence. Le libre pivotement du châssis arrière autour de ladite articulation centrale permet, de manière particulièrement avantageuse lorsque ledit semoir aborde un virage par exemple, à chaque organe d'implantation de rester dans la ligne de semis préparée par l'outil ouvreur correspondant. La suppression du pivotement du châssis arrière autour de ladite articulation centrale est, quant à elle, nécessaire pour assurer une bonne stabilité du semoir lors de son transport. A cet effet, lesdits moyens de verrouillage comportent des organes de verrouillage implantés sur les organes de liaison reliant les roues audit châssis avant.

Lors de la mise en position de transport, lesdites roues sont éloignées dudit châssis avant et le semoir est soulevé du sol. Lorsque les roues sont dans la position la plus éloignée du châssis avant, lesdits organes de verrouillage viennent automatiquement en contact contre des butées liées au châssis arrière. Cette mise en contact provoque d'une part l'alignement dudit châssis arrière par rapport audit châssis avant, et d'autre part le verrouillage de ladite articulation centrale. Lors de la mise en position de travail, les roues sont approchées du châssis avant et le semoir est abaissé vers le sol. Dés que les roues ont quitté leur position la plus éloignée du châssis avant, les organes de verrouillage libèrent automatiquement le châssis arrière. Ce dernier peut donc à nouveau pivoter librement autour de l'articulation centrale.

Avec ce semoir connu ladite articulation centrale est donc déverrouillée, lors de la mise en position de travail, avant que lesdits organes d'implantation sont en contact avec le sol. De plus lors de la mise en position de transport, lesdits châssis avant et arrière sont alignés et ladite articulation centrale est verrouillée bien après que lesdits organes d'implantation sont sortis de terre.

Dans certaines conditions de travail, ce semoir connu peut présenter un inconvénient. En effet lorsque le semoir est en dévers, le châssis arrière a naturellement tendance, du fait de son poids, à pivoter par rapport au châssis avant autour de ladite articulation centrale. Ainsi lors de la mise en position de transport, ledit semoir étant en dévers, ledit châssis arrière pivote autour de ladite articulation centrale dés que lesdits organes d'implantation sont sortis de terre. Il en résulte donc un choc, plus ou moins violent en fonction de l'importance du dévers, entre ledit châssis avant et ledit châssis arrière. Ce choc répétitif provoque des contraintes mécaniques préjudiciables à la durée de vie de l'ensemble du semoir.

Le but de la présente invention vise à remédier à cet inconvénient de l'état de la technique.

A cet effet, le semoir selon la présente invention est caractérisé par le fait qu'il comporte des moyens permettant d'aligner, dés la sortie de terre desdits organes d'implantation, ledit châssis arrière par rapport audit châssis avant, lesdits moyens d'alignement comportant en sus un vérin d'alignement. Ainsi, les chocs décrits ci-dessus sont supprimés.

Selon une autre caractéristique de l'invention, lesdits moyens d'alignement permettent également, lors du transport, de supprimer le pivotement du châssis arrière autour de l'articulation centrale. Le semoir conforme à l'invention n'a donc pas besoin de moyens de verrouillage supplémentaires pour assurer une bonne stabilité de la machine lors du transport.

Selon une caractéristique supplémentaire de l'invention, lesdits moyens d'alignement permettent également, lors du travail, le libre pivotement du châssis arrière autour de l'articulation centrale. Les organes d'implantation peuvent donc avantageusement suivre, lorsque le semoir conforme à l'invention aborde un virage par exemple, les lignes de semis préparées par les outils ouvreurs.

Selon une caractéristique supplémentaire de l'invention, lesdits moyens d'alignement permettent également de supprimer, lors du travail si nécessaire, le pivotement du châssis arrière autour de l'articulation centrale. Lesdits organes d'implantation pourront suivre de manière remarquable, même lors de travail en dévers, les lignes de semis préparées par les outils ouvreurs.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, en vue de dessus, un semoir conforme à l'invention,

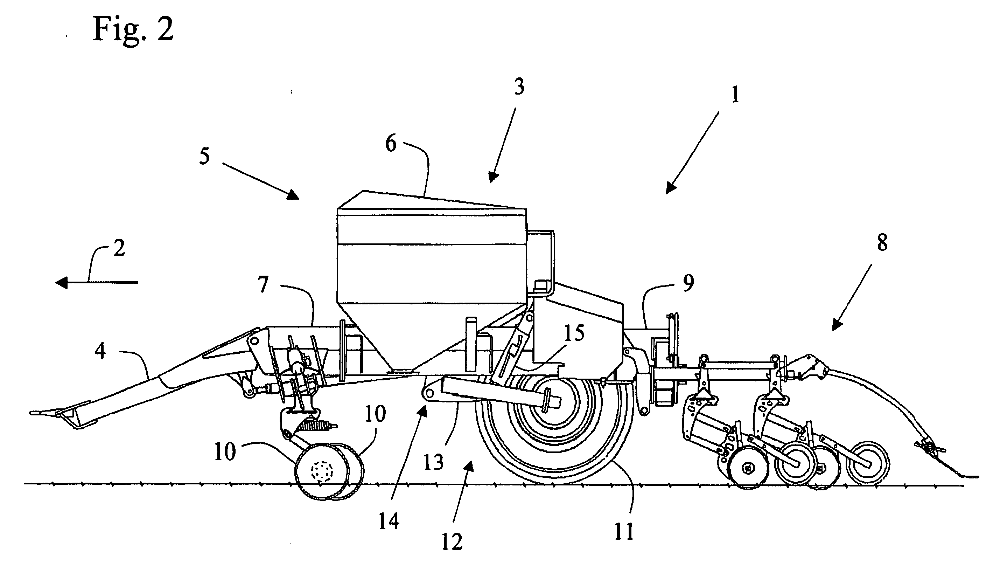

- la **figure 2** représente, vu suivant la flèche I définie sur la figure 1, le semoir de la figure 1,
- la **figure 3** représente, vu en coupe suivant la flèche I définie sur la figure 1 et à une autre échelle, un exemple de réalisation des moyens permettant d'aligner les deux châssis,
- la **figure 4** représente, vus suivant la flèche II définie sur la figure 3, lesdits moyens d'alignement dans une position,
- la **figure 5** représente, selon la même vue que la figure 4, le dispositif de verrouillage dans une autre position,
- la **figure 6** représente schématiquement un circuit hydraulique équipant le semoir de la figure 1.

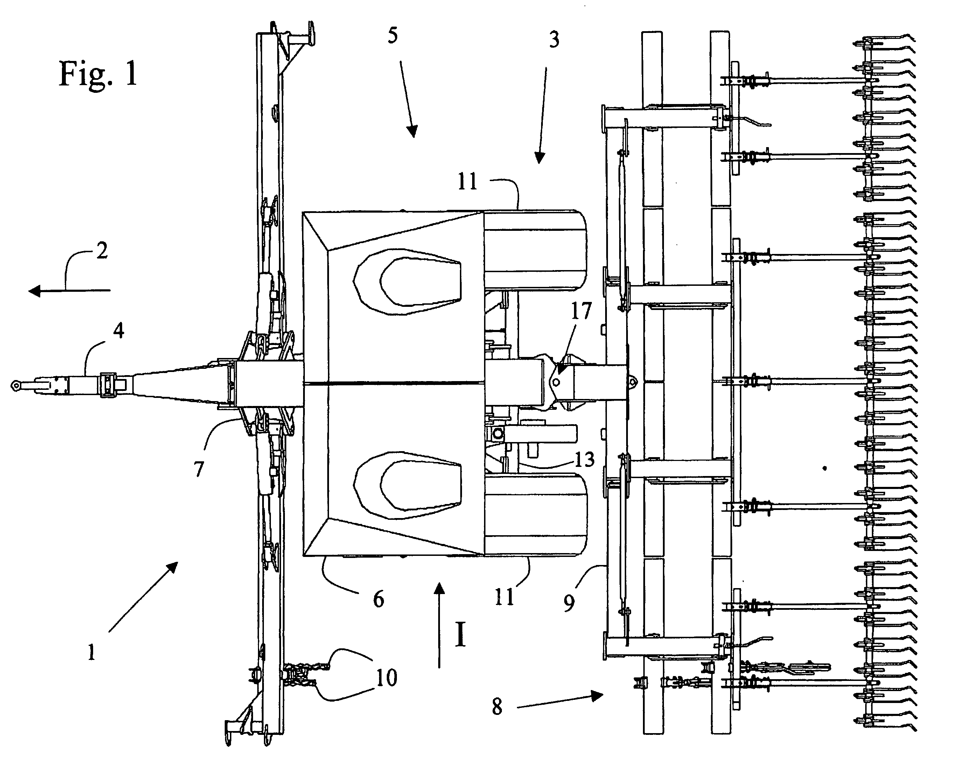

La figure 1 représente, en vue de dessus, un semoir (1) conforme à la présente invention. Lors du travail ou du transport, ledit semoir (1) est tracté suivant une direction et un sens d'avance indiqué par la flèche (2). Dans la suite de la description, les notions suivantes "avant" et "arrière", "devant" et "derrière" sont définies par rapport au sens d'avance (2) et les notions "droite" et "gauche" sont définies en regardant ledit semoir (1) de l'arrière dans le sens d'avance (2).

D'une manière connue de l'homme de l'art, ledit semoir (1) comporte un corps (3) lié à l'arrière d'un véhicule tracteur (non représenté) au moyen d'un timon d'attelage (4). A son tour, ledit corps (3) comporte un dispositif de semis (5) supporté par un châssis. Plus précisément, dans l'exemple de réalisation représenté sur les figures, ledit dispositif de semis (5) se compose notamment d'une trémie (6) liée à un châssis avant (7), et d'organes d'implantation (8) des graines dans le sol supportés par un châssis arrière (9).

Ledit semoir (1) représenté sur les figures permet, d'une manière particulièrement avantageuse, de préparer et d'ensemencer une bande de terre en un seul passage. A cet effet, ledit châssis avant (7) supporte également des outils ouvreurs (10) disposés devant lesdits organes d'implantation (8) et suivant une ligne au moins sensiblement horizontale et perpendiculaire à ladite direction d'avance (2).

Pour des raisons de clarté, ledit semoir (1) représenté sur la figure 1 ne comporte que deux outils ouvreurs (10). Dans la pratique, lesdits outils ouvreurs (10) sont répartis de manière au moins sensiblement uniforme sur toute la largeur de travail dudit semoir (1). Cette remarque est également valable pour lesdits organes d'implantation (8).

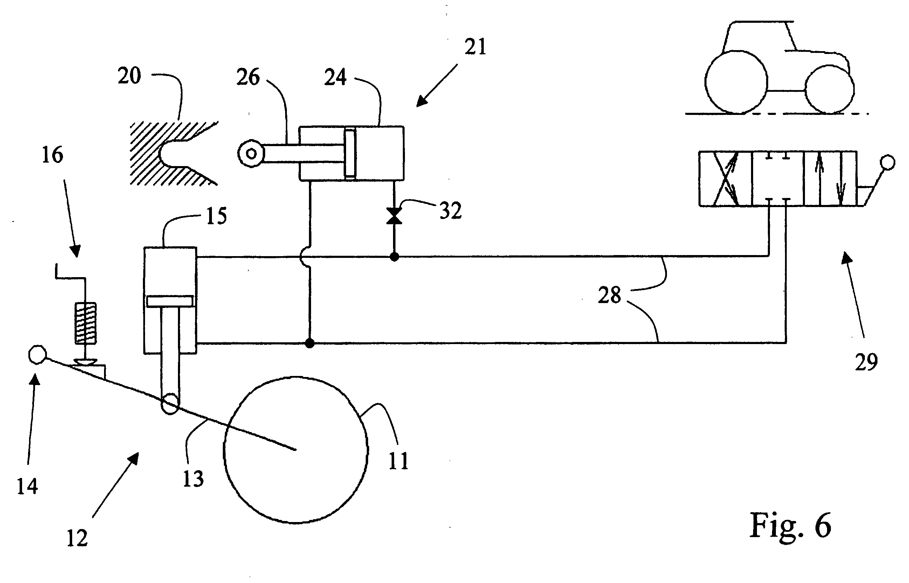

D'une manière également connue de l'homme de l'art, ledit châssis avant (7) s'appuie au moins partiellement sur le sol au moyen de deux roues (11). Lesdites roues (11) sont liées audit châssis avant (7), avantageusement de manière à pouvoir être déplacées en hauteur, au moyen d'organes de liaison (12). Dans l'exemple de réalisation représenté sur les figures, lesdits organes de liaison (12) se composent notamment d'un chariot (13) lié audit châssis avant (7) au moyen d'une articulation (14) d'axe au moins sensiblement horizontal et perpendiculaire à ladite direction d'avance (2). Ledit chariot (13) peut être pivoté autour de ladite articulation (14) au moyen d'au moins un vérin de relevage (15). Ainsi, par pivotement dudit chariot (13) autour de ladite articulation (14), lesdites roues (11) peuvent être éloignées ou rapprochées dudit châssis avant (7). Ledit semoir (1) peut ainsi donc être abaissé pour le travail ou soulevé pour le transport. D'une manière préférentielle, ledit semoir (1) comporte également un dispositif de réglage (16), représenté de manière schématique sur la figure 6, définissant l'abaissement maximal dudit semoir (1). De ce fait, la profondeur de travail desdits outils ouvreurs (10) peut aisément être réglée.

Dans l'exemple de réalisation représenté sur les figures, l'avant dudit châssis arrière (9) est lié à l'arrière dudit châssis avant (7) au moyen d'une articulation centrale (17) d'axe (17a) au moins sensiblement vertical. Ladite articulation centrale (17) est avantageusement comprise dans un plan vertical médian dudit châssis avant (7). De manière préférentielle, ladite articulation centrale (17) est également disposée sensiblement à mi-distance entre lesdits outils ouvreurs (10) et lesdits organes d'implantation (8). Ainsi lorsque ledit semoir (1) effectue un virage, ladite articulation centrale (17) permet auxdits organes d'implantation (8) de suivre les traces desdits outils ouvreurs (10).

Selon une caractéristique importante de la présente invention, ledit semoir (1) comporte en sus des moyens (18) permettant d'aligner, dés la sortie de terre desdits organes d'implantation (8), ledit châssis arrière (9) par rapport audit châssis avant (7).

Dans l'exemple de réalisation représenté sur les figures, lesdits moyens d'alignement (18) se composent notamment d'une broche (19) liée audit châssis arrière (9), d'une mâchoire (20) liée audit châssis avant (7), et d'un vérin d'alignement (21). L'alignement dudit châssis arrière (9) avec ledit châssis avant (7) s'obtient en coulissant, au moyen dudit vérin d'alignement (21), ladite broche (19) dans ladite mâchoire (20).

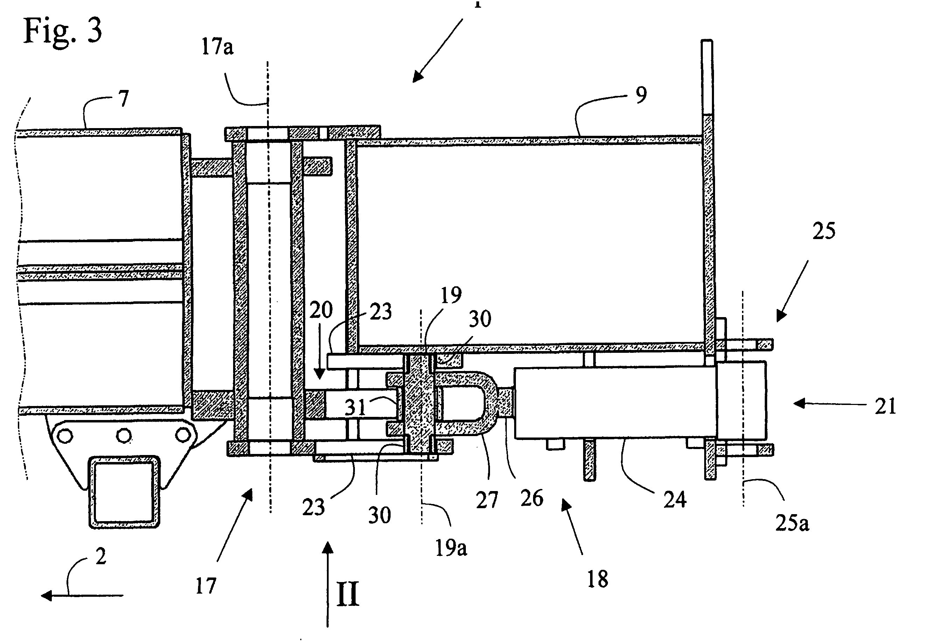

Plus précisément à la lumière des figures 3 à 5, ladite mâchoire (20) comporte une rampe d'alignement (22), décrivant au moins sensiblement la forme d'un "V", comprise dans un plan d'extension au moins sensiblement horizontal. Ladite rampe d'alignement (22) est avantageusement disposée, de manière au moins sensiblement symétrique, de part et d'autre du plan vertical médian dudit châssis avant (7). De plus, l'ouverture du "V" formé par ladite rampe d'alignement (22) est orientée vers l'arrière dudit semoir (1).

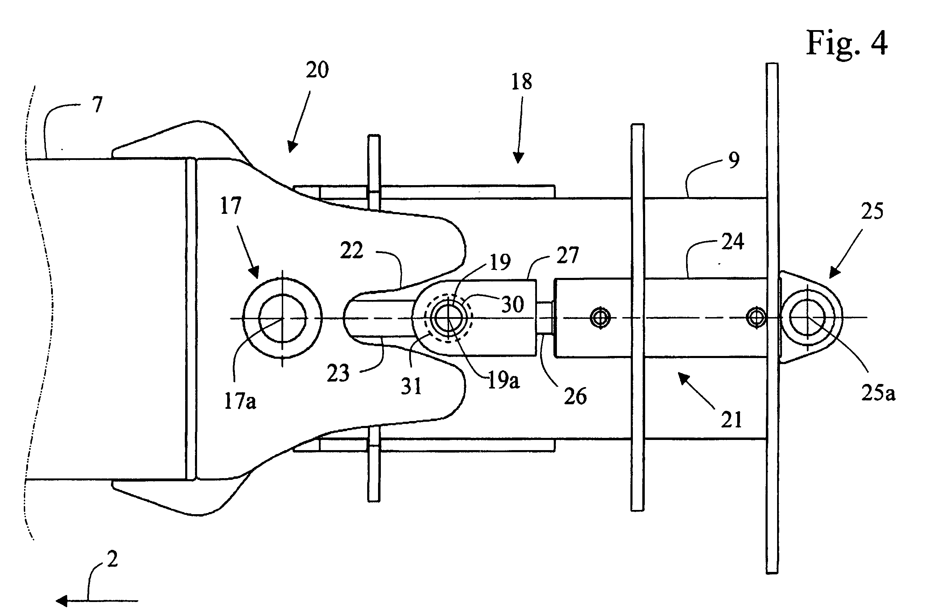

Pour sa part, ladite broche (19) comporte un axe longitudinal (19a) orienté au moins sensiblement verticalement. Ladite broche (19) est guidée en translation au moyen de deux gorges de guidage (23) liées audit châssis arrière (9). Lesdites gorges de guidage (23) sont avantageusement disposées à la verticale l'une de l'autre dans des plans respectifs au moins sensiblement horizontaux. De manière préférentielle, lesdites gorges de guidage (23) sont disposées symétriquement de part et d'autre dudit plan d'extension de ladite mâchoire (20). De plus en se référant notamment à la figure 4, lesdites gorges de guidage (23) sont orientées suivant un plan vertical médian dudit châssis arrière (9). Ladite broche (19) est donc guidée en translation dans ledit plan vertical médian dudit châssis arrière (9) suivant une direction au moins sensiblement horizontale.

Ledit vérin d'alignement (21), quant à lui, comporte un corps (24) lié audit châssis arrière (9) au moyen d'une articulation (25) d'axe (25a) au moins sensiblement vertical. Ledit vérin d'alignement (21) comporte également une tige (26) liée à ladite broche (19) au moyen d'une chape (27). D'une manière préférentielle telle que représentée sur la figure 3, chaque aile de ladite chape (27) est disposée entre ladite mâchoire (20) et une gorge de guidage respective (23).

Les figures 3 et 4 représentent plus particulièrement lesdits moyens d'alignement (18) en position arrière. Dans cette configuration, utilisée lorsque ledit semoir (1) est en position de travail, ledit vérin d'alignement (21) est à sa course minimale et ladite broche (19) se trouve à l'entrée de ladite rampe d'alignement (22). Ledit châssis arrière (9) peut donc pivoter librement autour de ladite articulation centrale (17) avec un débattement angulaire délimité par le contact de ladite broche (19) contre ladite rampe d'alignement (22). De manière préférentielle, l'entrée de ladite rampe d'alignement (22) est avantageusement pourvue d'une largeur relativement importante par rapport au diamètre de ladite broche (19). De ce fait lors du travail, le débattement angulaire dudit châssis arrière (9) par rapport audit châssis avant (7) est suffisamment important pour permettre auxdits organes d'implantation (8) de suivre les traces desdits outils ouvreurs (10). Par contre, la largeur de l'entrée de ladite rampe d'alignement (22) est suffisamment restreinte pour éviter tout choc entre des éléments liés audit châssis avant (7) et des éléments liés audit châssis arrière (9).

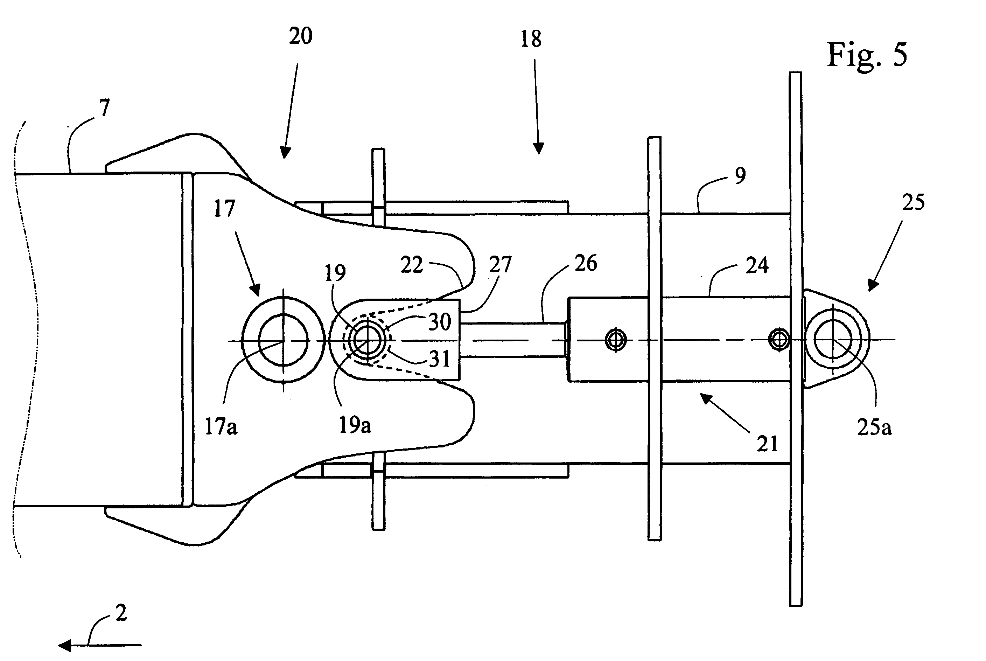

Pour sa part, la figure 5 représente lesdits moyens d'alignement (18) en position avant. Dans cette configuration, utilisée lorsque ledit semoir (1) est en position de transport, ledit vérin d'alignement (21) est à sa course maximale et ladite broche (19) se trouve au fond de ladite rampe d'alignement (22). De manière préférentielle, la largeur de ladite rampe d'alignement (22) diminue progressivement entre l'entrée et le fond de cette dernière.

Ainsi quelle que soit la position angulaire dudit châssis arrière (9) par rapport audit châssis avant (7), un déplacement de ladite broche (19) de la position arrière vers la position avant provoque la mise en butée de cette dernière contre ladite rampe d'alignement (22). Ledit châssis arrière (9) ne peut donc pas s'écarter d'avantage de l'alignement avec ledit châssis avant (7). Les chocs entre ledit châssis arrière (9) et ledit châssis avant (7) sont donc supprimés. Puis en s'appuyant contre ladite rampe d'alignement (22), ladite broche (19) est progressivement amenée vers ledit plan vertical médian dudit châssis avant (7). Ceci a pour effet de pivoter ledit châssis arrière (9) pour l'aligner par rapport audit châssis avant (7).

Pour des raisons de clarté, les figures 3 à 5 représentent uniquement lesdits moyens d'alignement (18), partiellement ledit châssis avant (7) et partiellement ledit châssis arrière (9). Hormis ledit corps (24) dudit vérin d'alignement (21), ces éléments (7, 9, 18) sont représentés en coupe sur la figure 3. De plus sur les figures 4 et 5, tous ces éléments (7, 9, 18) sont représentés sauf la gorge de guidage inférieure (23).

Selon une autre caractéristique de la présente invention, l'alignement dudit châssis arrière (9) par rapport audit châssis avant (7) s'effectue automatiquement lorsque lesdits organes d'implantation (8) sortent de terre. A cet effet, lesdits moyens d'alignement (18) sont avantageusement liés auxdits organes de liaison (12).

Ainsi dans l'exemple de réalisation représenté sur les figures et plus particulièrement sur la figure 6, ledit vérin de relevage (15) est un vérin double effet alimenté, au moyen de conduites (28), par un circuit hydraulique (non représenté) dudit véhicule tracteur. De manière préférentielle, ledit vérin de relevage (15) est piloté par l'utilisateur depuis le poste de pilotage dudit véhicule tracteur au moyen d'un distributeur à trois positions (29). D'une manière connue de l'homme de l'art, ledit distributeur (29) commande soit l'extension, soit la rétraction, soit l'immobilisation dudit vérin de relevage (15).

Pour sa part ledit vérin d'alignement (21), également de type double effet, est avantageusement branché en parallèle avec ledit vérin de relevage (15). Plus précisément, le branchement entre lesdits vérins (15 ; 21) est réalisé de manière à ce que la commande de l'extension dudit vérin de relevage (15) provoque également l'extension dudit vérin d'alignement (21). De plus, ledit vérin d'alignement (21) est avantageusement prioritaire sur ledit vérin de relevage (15). De ce fait, l'extension dudit vérin d'alignement (21) s'effectue avant l'extension dudit vérin de relevage (15). Ceci peut être obtenu, par exemple, en choisissant convenablement la section des pistons respectifs desdits vérins (15 ; 21). D'une manière particulièrement avantageuse, afin de ne pas déformer lesdits organes d'implantation (8) lors de la mise en position de transport, lesdits moyens d'alignement (18) ne peuvent pas pivoter ledit châssis arrière (9) tant que lesdits organes d'implantation (8) sont encore en terre. Ceci peut être obtenu en choisissant une section de piston dudit vérin d'alignement (21) relativement faible.

Ainsi lorsque l'utilisateur commande ledit distributeur (29) pour mettre ledit semoir (1) en position de transport, le circuit d'hydraulique provoque dans un premier temps l'extension dudit vérin d'alignement (21) donc la mise en butée de ladite broche (19) contre ladite rampe d'alignement (22). Ledit vérin d'alignement (21) n'étant pas assez puissant pour pivoter ledit châssis arrière (9) lorsque lesdits organes d'implantation (8) sont encore en terre, ledit circuit hydraulique provoque dans un second temps l'extension dudit vérin de relevage (15) donc le soulèvement dudit semoir (1). Finalement dés que lesdits organes d'implantation (8) ont quitté le sol, ledit vérin d'alignement (21) devient à nouveau prioritaire et ledit châssis arrière (9) est aligné par rapport audit châssis avant (7).

On comprendra également que le circuit hydraulique représenté sur la figure 6 provoque la rétraction dudit vérin d'alignement (21) lorsque l'utilisateur commande, grâce audit distributeur (29), la rétraction dudit vérin de relevage (15). D'une manière particulièrement avantageuse, lors de la mise en position de travail, le poids dudit corps (3) fait que ledit semoir (1) s'abaisse avant que ledit vérin d'alignement (21) se rétracte. Ainsi, ladite articulation centrale (17) est déverrouillée uniquement à partir du moment où lesdits organes d'implantation (8) sont en contact avec le sol. Ledit semoir (1) étant en dévers, ledit châssis arrière (9) ne risque donc pas de venir heurter ledit châssis avant (7) lors de la mise en position travail.

De manière préférentielle, le contact de ladite broche (19) contre ledit châssis arrière (9) et le contact de ladite broche (19) contre ladite mâchoire (20) se font par l'intermédiaire de galets (30, 31). Ainsi, chaque extrémité de ladite broche (19) est pourvue d'un galet d'extrémité (30) roulant dans une gorge de guidage respective (23). De plus, ladite broche (19) comporte un troisième galet (31) disposé en vis-à-vis de ladite rampe d'alignement (22). Lesdits galets (30, 31) diminuent de manière considérable les forces de frottement subies par ladite broche (29). Cette dernière, malgré le couple nécessaire pour aligner ledit châssis arrière (9), peut donc aisément être coulissée par ledit vérin (21).

De manière préférentielle encore, la largeur du fond de ladite rampe d'alignement (22) correspond au moins sensiblement au diamètre dudit troisième galet (31). Ainsi lorsque ladite broche (19) est en position avant (figure 5), lesdits moyens d'alignement (18) provoquent un verrouillage de ladite articulation centrale (17) favorable à une bonne stabilité dudit semoir (1) lors de son transport.

Dans l'exemple de réalisation représenté sur la figure 6, ledit semoir (1) comporte en sus une vanne d'isolement (32) branchée sur l'une des conduites alimentant ledit vérin d'alignement (21). En fermant ladite vanne d'isolement (32), l'utilisateur peut immobiliser ledit vérin d'alignement (21), par exemple, dans sa position étendue (figure 5). Ainsi l'utilisateur peut, si nécessaire et malgré la mise en position de travail dudit semoir (1), maintenir ledit châssis arrière (9) aligné avec ledit châssis avant (7). Ceci peut être particulièrement avantageux lors du travail sur des terrains ayant un dévers important.

Le semoir (1) qui vient d'être décrit, n'est qu'un exemple qui ne saurait en aucun cas limiter le domaine de protection défini par les revendications suivantes.

## Revendications

1. Semoir (1) comportant :
- un timon d'attelage (4) destiné à être lié à un véhicule moteur,
- un corps (3) comportant
* un châssis composé :
• d'un châssis avant (7) lié audit timon d'attelage (4), portant des outils ouvreurs (10) et s'appuyant sur le sol au moyen de roues (11) qui y sont liées de manière à pouvoir être déplacées en hauteur au moyen d'organes de liaison (12), et
• d'un châssis arrière (9) lié audit châssis avant (7) au moyen d'une articulation centrale (17) d'axe (17a) au moins sensiblement vertical,
et
* un dispositif de semis (5) comportant entre autres une trémie (6) et des organes d'implantation (8) de graines dans le sol, ces derniers étant portés par le châssis arrière (9),
***caractérisé par le fait que*** ledit semoir (1) comporte en sus des moyens (18) permettant d'aligner, dés la sortie de terre desdits organes d'implantation (8), ledit châssis arrière (9) par rapport audit châssis avant (7), lesdits moyens d'alignement (18) comportent en sus un vérin d'alignement (21).

2. Semoir selon la revendication 1, ***caractérisé par le fait que*** lesdits moyens (18) alignent, automatiquement dés la sortie de terre desdits organes d'implantation (8), ledit châssis arrière (9) par rapport audit châssis avant (7).

3. Semoir selon l'une des revendications 1 à 2, ***caractérisé par le fait que*** lesdits moyens d'alignement (18) suppriment, lors du transport, le pivotement dudit châssis arrière (9) par rapport audit châssis avant (7) autour de ladite articulation centrale (17).

4. Semoir selon l'une des revendications 1 à 3, ***caractérisé par le fait que*** lesdits moyens d'alignement (18) autorisent, uniquement lors de l'entrée en contact desdits organes d'implantation (8) avec le sol, le pivotement dudit châssis arrière (9) par rapport audit châssis avant (7) autour de ladite articulation centrale (17).

5. Semoir selon l'une des revendications 1 à 4, ***caractérisé par le fait que*** lesdits moyens d'alignement (18) sont liés auxdits organes de liaison (12).

6. Semoir selon l'une des revendications 1 à 5, ***caractérisé par le fait que*** lesdits moyens d'alignement (18) comportent une broche (19).

7. Semoir selon la revendication 6, ***caractérisé par le fait que*** ladite broche (19) est liée audit châssis arrière (9).

8. Semoir selon la revendication 6 ou 7, ***caractérisé par le fait que*** ladite broche (19) est guidée en translation, au moyen de deux gorges de guidage (23), dans un plan vertical médian dudit châssis arrière (9) et suivant une direction au moins sensiblement horizontale.

9. Semoir selon la revendication 8, ***caractérisé par le fait que*** chaque extrémité de ladite broche (19) est pourvue d'un galet d'extrémité (30) roulant dans une gorge de guidage respective (23).

10. Semoir selon l'une des revendications 1 à 9, ***caractérisé par le fait que*** lesdits moyens d'alignement (18) comportent également une mâchoire (20).

11. Semoir selon la revendication 10, ***caractérisé par le fait que*** ladite mâchoire (20) est liée audit châssis avant (7).

12. Semoir selon la revendication 10 ou 11, ***caractérisé par le fait que*** ladite mâchoire (20) comporte une rampe d'alignement (22), décrivant au moins sensiblement la forme d'un "V", compris dans un plan d'extension au moins sensiblement horizontal.

13. Semoir selon la revendication 12, ***caractérisé par le fait que*** ladite rampe d'alignement (22) est disposée, de manière au moins sensiblement symétrique, de part et d'autre d'un plan vertical médian dudit châssis avant (7).

14. Semoir selon la revendication 12 ou 13 prise en combinaison avec la revendication 9, ***caractérisé par le fait que*** ladite broche (19) comporte un troisième galet (31) disposé en vis-à-vis de ladite rampe d'alignement (22).

15. Semoir selon la revendication 1, ***caractérisé par le fait que*** ledit vérin d'alignement (21) comporte un corps (24) lié audit châssis arrière (9) au moyen d'une articulation (25).

16. Semoir selon l'une des revendications 1 à 15, ***caractérisé par le fait que*** ledit vérin d'alignement (21) comporte une tige (26) liée à ladite broche (19) au moyen d'une chape (27).

17. Semoir selon l'une des revendications 1 à 16, ***caractérisé par le fait que*** ledit vérin d'alignement (21) est de type double effet.

18. Semoir selon l'une des revendications 1 à 17, ***caractérisé par le fait que*** ledit vérin d'alignement (21) est branché en parallèle avec un vérin de relevage (15) déplaçant en hauteur lesdites roues (11) par rapport audit châssis avant (7).

19. Semoir selon l'une des revendications 1 à 18, ***caractérisé par le fait que*** ledit semoir (1) comporte en sus une vanne d'isolement (32) branchée sur une conduite alimentant ledit vérin d'alignement (21).

## Patentansprüche

1. Sämaschine ( 1 ) mit
- einer Kupplungsdeichsel (4), die mit einem Motorfahrzeug verbunden werden soll, und
- einem Körper (3), der
* ein Gestell, das aus
- einem mit der Kupplungsdeichsel (4) verbundenen vorderen Gestell (7), das Öffnungswerkzeuge (10) trägt und sich mittels Rädern (11), welche mittels Verbindungselementen (12) in der Höhe verschiebbar damit verbunden sind, auf den Boden stützt, und
- einem hinteren Gestell (9), das mittels eines mittleren Gelenks (17) mit einer zumindest im Wesentlichen vertikalen Achse (17a) mit dem vorderen Gestell (7) verbunden ist, besteht,
und
* eine Sävorrichtung (5), die unter anderem einen Trichter (6) und Elemente (8) zum Ablegen von Samen in den Boden aufweist, wobei diese Elemente von dem hinteren Gestell (9) getragen werden, umfasst,
***dadurch gekennzeichnet,* dass** die Sämaschine (1) des Weiteren Mittel (18) umfasst, die es gestatten, das hintere Gestell (9) bezüglich des vorderen Gestells (7) auszurichten, sobald die Ablageelemente (8) den Boden verlassen haben, wobei die Ausrichtungsmittel (18) des Weiteren einen Ausrichtungszylinder (21) aufweisen.

2. Sämaschine nach Anspruch 1, ***dadurch gekennzeichnet,* dass** die Ausrichtungsmittel (18) das hintere Gestell (9) bezüglich des vorderen Gestells (7) automatisch ausrichten, sobald die Ablageelemente (8) den Boden verlassen haben.

3. Sämaschine nach einem der Ansprüche 1 oder 2, ***dadurch gekennzeichnet,* dass** die Ausrichtungsmittel (18) beim Transport das Schwenken des hinteren Gestells (9) bezüglich des vorderen Gestells (7) um das mittlere Gelenk (17) verhindern.

4. Sämaschine nach einem der Ansprüche 1 bis 3, ***dadurch gekennzeichnet,* dass** die Ausrichtungsmittel (18) nur bei Inkontakttreten der Ablageelemente (8) mit dem Boden das Schwenken des hinteren Gestells (9) bezüglich des vorderen Gestells (7) um das mittlere Gelenk (17) gestatten.

5. Sämaschine nach einem der Ansprüche 1 bis 4, ***dadurch gekennzeichnet,* dass** die Ausrichtungsmittel (18) mit den Verbindungselementen (12) verbunden sind.

6. Sämaschine nach einem der Ansprüche 1 bis 5, ***dadurch gekennzeichnet,* dass** die Ausrichtungsmittel (18) einen Zapfen (19) aufweisen.

7. Sämaschine nach Anspruch 6, ***dadurch gekennzeichnet,* dass** der Zapfen (19) mit dem hinteren Gestell (9) verbunden ist.

8. Sämaschine nach Anspruch 6 oder 7, ***dadurch gekennzeichnet,* dass** der Zapfen (19) mittels zweier Führungskehlen (23) in einer vertikalen mittleren Ebene des hinteren Gestells (9) entlang einer im Wesentlichen horizontalen Richtung translatorisch geführt wird.

9. Sämaschine nach Anspruch 8, ***dadurch gekennzeichnet,* dass** jedes Ende des Zapfens (19) mit einer Endrolle (30) versehen ist, die in einer jeweiligen Führungskehle (23) rollt.

10. Sämaschine nach einem der Ansprüche 1 bis 9, ***dadurch gekennzeichnet,* dass** die Ausrichtungsmittel (18) des Weiteren eine Spannbacke (20) aufweisen.

11. Sämaschine nach Anspruch 10, ***dadurch gekennzeichnet,* dass** die Spannbacke (20) mit dem vorderen Gestell (7) verbunden ist.

12. Sämaschine nach Anspruch 10 oder 11, ***dadurch gekennzeichnet,* dass** die Spannbacke (20) eine Ausrichtungsrampe (22) aufweist, die zumindest im Wesentlichen die Form eines "V" beschreibt, das in einer zumindest im Wesentlichen horizontalen Erstreckungsebene enthalten ist.

13. Sämaschine nach Anspruch 12, ***dadurch gekennzeichnet,* dass** die Ausrichtungsrampe (22) zumindest im Wesentlichen symmetrisch auf beiden Seiten einer vertikalen mittleren Ebene des vorderen Gestells (7) angeordnet ist.

14. Sämaschine nach Anspruch 12 oder 13 in Kombination mit Anspruch 9, ***dadurch gekennzeichnet,* dass** der Zapfen (19) eine dritte Rolle (31) aufweist, die gegenüber der Ausrichtungsrampe (22) angeordnet ist.

15. Sämaschine nach Anspruch 1, ***dadurch gekennzeichnet,* dass** der Ausrichtungszylinder (21) einen mittels eines Gelenks (25) mit dem hinteren Gestell (9) verbundenen Körper (24) aufweist.

16. Sämaschine nach einem der Ansprüche 1 bis 15, ***dadurch gekennzeichnet,* dass** der Ausrichtungszylinder (21) eine mittels eines Bügels (27) mit dem Zapfen (19) verbundene Stange (26) aufweist.

17. Sämaschine nach einem der Ansprüche 1 bis 16, ***dadurch gekennzeichnet,* dass** der Ausrichtungszylinder (21) ein doppeltwirkender Zylinder ist.

18. Sämaschine nach einem der Ansprüche 1 bis 17, ***dadurch gekennzeichnet,* dass** der Ausrichtungszylinder (21) mit einem Hubzylinder (15), der die Räder (11) bezüglich des vorderen Gestells (7) in der Höhe verschiebt, parallelgeschaltet ist.

19. Sämaschine nach einem der Ansprüche 1 bis 18, ***dadurch gekennzeichnet,* dass** die Sämaschine (1) des Weiteren ein an einer Versorgungsleitung des Ausrichtungszylinders (21) angeschlossenes Absperrventil (32) aufweist.

## Claims

1. Seed drill (1) comprising:
- a hitching drawbar (4) intended to be connected to a motor vehicle,
- a body (3) comprising
* a chassis made up of:
• a front chassis (7) connected to said hitching drawbar (4), carrying opening tools (10) and resting on the ground by means of wheels (11) which are connected thereto in such a way as to be able to be moved heightwise by means of connecting members (12), and
• a rear chassis (9) connected to said front chassis (7) by means of a central articulation (17) the axis (17a) of which is at least substantially vertical,
and
* a sowing device (5) comprising, amongst other things, a hopper (6) and members (8) for planting seeds in the ground, these members being carried by the rear chassis (9),
***characterized in* that** said seed drill (1) additionally comprises means (18) making it possible, as soon as said planting members (8) leave the earth, to align said rear chassis (9) with respect to said front chassis (7), said alignment means (18) additionally comprising an alignment jack (21).

2. Seed drill according to Claim 1, ***characterized in* that** said means (18) automatically, as soon as said planting members (8) leave the earth, align said rear chassis (9) with respect to said front chassis (7).

3. Seed drill according to one of Claims 1 and 2, ***characterized in* that** said alignment means (18) during transport eliminate the pivoting of said rear chassis (9) with respect to said front chassis (7) about said central articulation (17).

4. Seed drill according to one of Claims 1 to 3, ***characterized in* that** said alignment means (18) allow said rear chassis (9) to pivot with respect to said front chassis (7) about said central articulation (17) only when said planting members (8) come into contact with the ground.

5. Seed drill according to one of Claims 1 to 4, ***characterized in* that** said alignment means (18) are connected to said connecting members (12).

6. Seed drill according to one of Claims 1 to 5, ***characterized in* that** said alignment means (18) comprise a pin (19).

7. Seed drill according to Claim 6, ***characterized in* that** said pin (19) is connected to said rear chassis (9).

8. Seed drill according to Claim 6 or 7, ***characterized in* that** said pin (19) is guided in translation by means of two guide grooves (23) in a vertical mid-plane of said rear chassis (9) and in an at least substantially horizontal direction.

9. Seed drill according to Claim 8, ***characterized in* that** each end of said pin (19) has an end roller (30) rolling in a respective guide groove (23).

10. Seed drill according to one of Claims 1 to 9, ***characterized in* that** said alignment means (18) also comprise a jaw (20).

11. Seed drill according to Claim 10, ***characterized in* that** said jaw (20) is connected to said front chassis (7).

12. Seed drill according to Claim 10 or 11, ***characterized in* that** said jaw (20) comprises an alignment ramp (22) at least substantially describing the shape of a V, lying in a plane that extends at least substantially horizontally.

13. Seed drill according to Claim 12, ***characterized in* that** said alignment ramp (22) is arranged in an at least substantially symmetric manner on each side of a vertical mid-plane of said front chassis (7).

14. Seed drill according to Claim 12 or 13 taken in combination with Claim 9, ***characterized in* that** said pin (19) comprises a third roller (31) arranged facing said alignment ramp (22).

15. Seed drill according to Claim 1, ***characterized in* that** said alignment jack (21) comprises a body (24) connected to said rear chassis (9) by means of an articulation (25).

16. Seed drill according to one of Claims 1 to 15, ***characterized in* that** said alignment jack (21) comprises a rod (26) connected to said pin (19) by means of a yoke (27).

17. Seed drill according to one of Claims 1 to 16, ***characterized in* that** said alignment jack (21) is of the double-acting type.

18. Seed drill according to one of Claims 1 to 17, ***characterized in* that** said alignment jack (21) is connected in parallel with a lifting jack (15) which moves said wheels (11) heightwise with respect to said front chassis (7).

19. Seed drill according to one of Claims 1 to 18, ***characterized in* that** said seed drill (1) additionally comprises an isolation valve (32) connected to a pipe feeding said alignment jack (21).
